# EUROPEAN PATENT APPLICATION

(11) **EP 3 610 739 A1**
(43) Date of publication of application: **19.02.2020**
(21) Application number: 18198070.7
(22) Date of filing: 02.10.2018
(51) Int. Cl.: A24F 47/00

(54) **UNLOCKING METHOD FOR ELECTRONIC CIGARETTE, UNLOCKING SYSTEM, STORAGE MEDIUM AND UNLOCKING DEVICE**

(30) Priority: 17.08.2018 CN 201810941989
(71) Applicant: Shenzhen IVPS Technology Co., Ltd., 518000 Shenzhen Guangdong (CN)
(72) Inventor: OUYANG, Junwei, Shenzhen, Guangdong 518000 (CN)
(74) Representative: IP-PAL Patent & Trademark Attorneys GmbH

(57) **Abstract**

The present invention discloses an unlocking method for electronic cigarette based on face recognition, comprising the steps of: acquiring user image information, extracting facial feature information in user image information, analyzing the age of the user according to the facial feature information; determining whether the age of the user is within a preset age range; and if the user is within a preset age range, generating an instruction of unlocking an electronic cigarette. The present invention further discloses a face recognition-based electronic cigarette unlocking system, a mobile terminal, a computer readable storage medium, an electronic cigarette and a computer readable storage device. The present invention effectively improves the fun of the control method of the electronic cigarette. At the same time, the inadequacies that the current control method of electronic cigarettes is original and the use of electronic cigarettes cannot be limited for minors are solved.

## Description

### TECHNICAL FIELD

The present invention relates to the technical field of electronic cigarettes, and in particular, to an unlocking method for electronic cigarette based on face recognition, an unlocking system, a computer readable storage medium, a computer readable storage device, a mobile terminal, and an electronic cigarette.

### BACKGROUND

Electronic cigarettes are a relatively mature alternative to smoking on the market. After controlling to start the electronic cigarette, the battery heating element atomizes the tobacco tar in the atomizer to form smoke harmless to the human body. The smoker does not absorb tar and other harmful substances in the traditional cigarette when experiencing the smoking fun. Therefore, with the improvement of health awareness of people, especially small electronic cigarettes are highly respected by users due to being easy to carry. At the same time, electronic cigarettes have a large amount of smoke and have high novelty of the product so that it is easy to attract minors to imitate.

However, in the control of the current electronic cigarettes on the market, the electronic cigarettes are controlled and locked using a physical key. The electronic cigarettes are controlled by providing a physical key and by detecting the pressing operation of the physical key by the user. It is very easy for minors to control electronic cigarettes and smoke, which hinders the physical and mental growth of minors.

### SUMMARY

The main object of the present invention is to provide an unlocking method for electronic cigarette based on face recognition, an unlocking system, a computer readable storage medium, a computer readable storage device, a mobile terminal, and an electronic cigarette, which aims to solve the inadequacies that the current control method of electronic cigarettes is original and the use of electronic cigarettes cannot be limited for minors.

To achieve the above object, the present invention provides a face recognition-based electronic cigarette unlocking method, comprising the steps of:

acquiring user image information, extracting facial feature information in user image information, analyzing the age of the user according to the facial feature information;

confirming whether the age of the user is within a preset age range; and

if the user is within a preset age range, generating an instruction of unlocking an electronic cigarette.

Preferably, the step of extracting facial feature information in user image information, analyzing the age of the user according to the facial feature information, and confirming whether the age of the user is within a preset age range further comprises:

if the age of the user is not within a preset age range, recording the current number of times that user image information is acquired;

confirming whether the number of times is greater than a preset threshold; and

if the number of times is greater than a preset threshold, limiting the operation of acquiring user image information.

Preferably, it is confirmed whether the age of the user is within a preset age range; if the age of the user is not within a preset age range,

it is confirmed whether to switch the password verification mode;

if switched to the password verification mode, the user password information is acquired, and the user password information is matched with a preset password database to confirm whether there is preset password information matching the user password information in the preset password database; and

if there is matching preset password information, an instruction of unlocking an electronic cigarette is generated.

Preferably, the preset password information comprises digital password information, pattern drawing password information, fingerprint password information, and voice password information pre-stored by the user.

Preferably, it is confirmed whether the age of the user is within a preset age range;

if the age of the user is not within a preset age range, it is confirmed whether to switch to the identity information verification mode;

if switched to the identity information verification mode, the user identity information is acquired and the user identity information is matched with the standard identity information database;

it is confirmed whether there is standard identity information matching the user identity information in the standard identity information database;

if there is standard identity information, the standard identity information is extracted and it is confirmed whether the age in the standard identity information is within a preset age range; and

if the age in the standard identity information is within a preset age range, an instruction of unlocking an electronic cigarette is generated.

Preferably, the standard identity information database comprises: a resident identity card information database, a resident driving license database, a resident residence permit database, and a resident Hong Kong and Macao passport database.

Preferably, prior to the step of extracting and confirming whether the age in the standard identity information is within a preset age range, the method further comprises:

acquiring user image information, extracting facial feature information in the user image information, matching the facial feature information with the image information in the standard identity information, and confirming whether the facial feature information and the image information belong to the same user;

if the facial feature information and the image information belong to the same user, extracting and confirming whether the age in the standard identity information is within a preset age range; and

if the age in the standard identity information is within a preset age range, generating an instruction of unlocking an electronic cigarette.

Preferably, the step of acquiring user image information, extracting facial feature information in the user image information, matching the facial feature information with the image information in the standard identity information, and confirming whether the facial feature information and the image information belong to the same user comprises:

initially extracting facial feature information in the user image information, and matching the facial feature information with the image information in the standard identity information to confirm whether the facial feature information and the image information belong to the image information of the same user;

if the facial feature information and the image information belong to the image information of the same user, extracting the dynamic information of the facial feature in the user image information again, and confirming whether the dynamic information of the facial feature in the user image information is successfully extracted; and

if the dynamic information is successfully extracted, confirming that the facial feature information and the image information belong to the same user.

Preferably, the dynamic information comprises a blinking motion, a mouth opening motion, and a body surface temperature of the face of the user.

Preferably, subsequent to the step of confirming whether the age of the user is within a preset age range, the method further comprises:

if the age of the user is within a preset age range, confirming whether the corresponding user image information is stored in the preset user database; and

if it is confirmed that the corresponding user image information is stored in the preset user database, forming a corresponding user information account in the preset database; wherein the preset database is used for directly matching the user image information acquired subsequently.

Preferably, prior to the step of analyzing the age of the user according to the facial feature information and confirming whether the age of the user is within a preset age range, the method further comprises:

confirming whether there is a user information account matching the acquired user image information in the preset database; and

if there is a user information account matching the user image information in the preset database, generating an instruction of unlocking an electronic cigarette.

Preferably, subsequent to the step of if it is confirmed that the corresponding user image information is stored in the preset user database, forming a corresponding user information account in the preset database, the method further comprises:

entering authority information for each user information account stored in the preset database; and

if the user image information matching the user information account is acquired, generating an unlocking instruction equipped with the authority information.

Preferably, the authority information comprises an operating current output authority and an operating parameter adjustment authority;

the operating current output authority is configured to unlock the operating current output of the electronic cigarette, so that the battery device of the electronic cigarette is capable of supplying power to the atomizing device of the electronic cigarette for operation; and

the operating parameter adjustment authority is configured to unlock the operating parameter adjustment of the electronic cigarette, so that the battery device of the electronic cigarette is capable of adjusting the operating parameter set internally.

Preferably, subsequent to the step of if it is confirmed that the corresponding user image information is stored in the preset user database, forming a corresponding user information account in the preset database, the method further comprises:

acquiring the operating parameter of the electronic cigarette, and confirming whether the operating parameter of the electronic cigarette is stored in the current user information account;

if confirming that the operating parameter of the electronic cigarette is stored in the current user information account, saving the operating parameter in the current user information account and generating the custom parameter information of the current user information account; and

if the user image information matching the user information account is acquired, generating an instruction of unlocking an electronic cigarette equipped with the custom parameter information.

In addition, in order to achieve the above object, the present invention further provides a mobile terminal, wherein the mobile terminal comprises a user image information collecting device, a storage, and a processor, wherein a program of a face recognition-based electronic cigarette unlocking method is stored in the storage, wherein the program implements the steps of the face recognition-based electronic cigarette unlocking method described above when being executed by the processor. The face recognition-based electronic cigarette unlocking method acquires user image information, extracts facial feature information in user image information, analyzes the age of the user according to the facial feature information; confirms whether the age of the user is within a preset age range; and if the user is within a preset age range, generates an instruction of unlocking an electronic cigarette.

Preferably, the mobile terminal further comprises a communication module, wherein the communication module is configured to establish a communication connection with the electronic cigarette, and the communication module comprises Bluetooth, wifi, radio frequency, and data connecting wires.

In addition, in order to achieve the above object, the present invention further provides a computer readable storage medium, wherein a program of unlocking an electronic cigarette is stored in the computer readable storage medium, wherein the program of unlocking the electronic cigarette implements the steps of the face recognition-based electronic cigarette unlocking method described above when being executed. The face recognition-based electronic cigarette unlocking method acquires user image information, extracts facial feature information in user image information, analyzes the age of the user according to the facial feature information; confirms whether the age of the user is within a preset age range; and if the user is within a preset age range, generates an instruction of unlocking an electronic cigarette.

In addition, in order to achieve the above object, the present invention further provides an electronic cigarette, wherein the electronic cigarette comprises a user image information collecting device, a storage device and a processing device, wherein a program of the face recognition-based electronic cigarette unlocking method is stored in the storage device, wherein the program implements the steps of the face recognition-based electronic cigarette unlocking method described above when being executed by the processing device. The face recognition-based electronic cigarette unlocking method acquires user image information, extracts facial feature information in user image information, analyzes the age of the user according to the facial feature information; confirms whether the age of the user is within a preset age range; and if the user is within a preset age range, generates an instruction of unlocking an electronic cigarette.

In addition, in order to achieve the above object, the present invention further provides a computer readable storage device, wherein a program of the face recognition-based electronic cigarette unlocking method is stored in the computer readable storage device, wherein the program implements the steps of the face recognition-based electronic cigarette unlocking method described above when being executed. The face recognition-based electronic cigarette unlocking method acquires user image information, extracts facial feature information in user image information, analyzes the age of the user according to the facial feature information; confirms whether the age of the user is within a preset age range; and if the user is within a preset age range, generates an instruction of unlocking an electronic cigarette.

In addition, in order to achieve the above object, the present invention further provides a face recognition-based electronic cigarette unlocking system, wherein the electronic cigarette unlocking system comprises a mobile terminal, an electronic cigarette, and a communication device;

the mobile terminal comprises a user image information collecting device, a storage, and a processor, wherein a program of a face recognition-based electronic cigarette unlocking method is stored in the storage, wherein the program implements the steps of the face recognition-based electronic cigarette unlocking method described above when being executed by the processor. The face recognition-based electronic cigarette unlocking method acquires user image information, extracts facial feature information in user image information, analyzes the age of the user according to the facial feature information; confirms whether the age of the user is within a preset age range; and if the user is within a preset age range, generates an instruction of unlocking an electronic cigarette. The communication device transmits the instruction of unlocking an electronic cigarette to the electronic cigarette; and the electronic cigarette receives the instruction of unlocking an electronic cigarette and performs an operation of unlocking an electronic cigarette.

Preferably, the communication device comprises a wired communication device or a wireless communication device, and the wired communication device or the wireless communication device is at least one of WIFI, Bluetooth, and USB communication devices.

The present invention acquires the user image information and extracts the facial feature information in the image information for analyzing the age of the user, and then confirms whether the age of the user is within a preset age range; the preset age range may judge the age of the minors based on different national conditions, and set the legal adult age as the lower limit of the range; at the same time, the upper limit of the range is set as the safe use age to prevent the hidden danger resulted from the fact that the older people uses an inappropriately large amount of smoke of the electronic cigarette. It is further confirmed that the age of the user is within a preset age range to determine whether to generate an instruction of unlocking an electronic cigarette. The phenomenon that minors use electronic cigarettes is effectively restricted. At the same time, it convenient to unlock without adding more modules in the electronic cigarette which results in an increase in the volume of the electronic cigarette product.

### BRIEF DESCRIPTION OF THE DRAWINGS

FIG. 1 is a schematic diagram illustrating the structure of a mobile terminal in a hardware operating environment according to an embodiment of the present invention.
FIG.2 is a schematic diagram illustrating the structure of an electronic cigarette in a hardware operating environment involved in a face recognition-based electronic cigarette unlocking system according to an embodiment of the present invention.

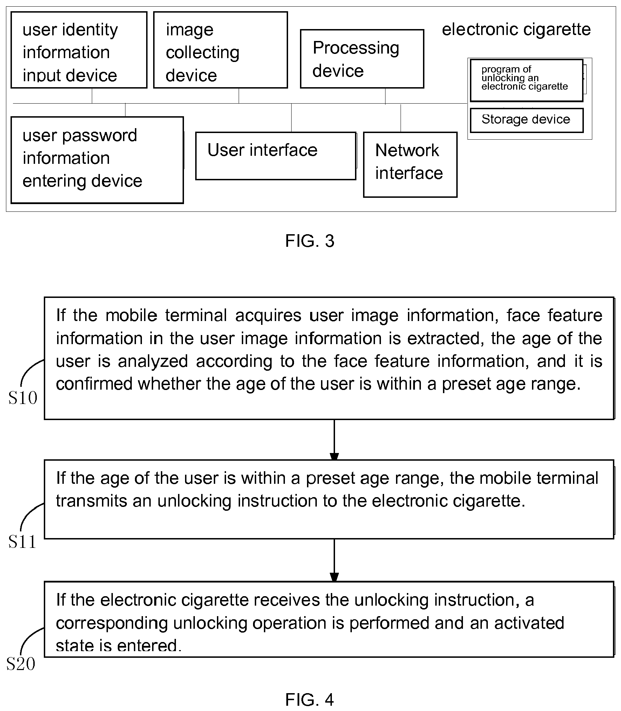

FIG. 3 is a schematic diagram illustrating the structure of an electronic cigarette in a hardware operating environment with an electronic cigarette as an execution subject in a face recognition-based electronic cigarette unlocking method according to an embodiment of the present invention.
FIG.4 is a schematic flow diagram illustrating a first embodiment in a face recognition-based electronic cigarette unlocking method according to the present invention.

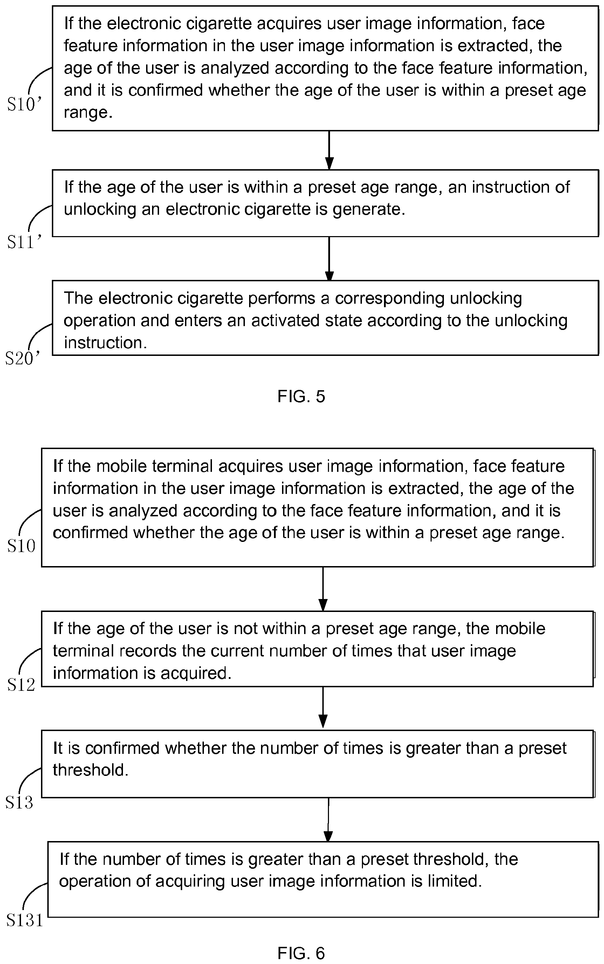

FIG.5 is a schematic flow diagram illustrating another embodiment with an electronic cigarette as an execution subject in a face recognition-based electronic cigarette unlocking method according to the present invention.
FIG. 6 is a schematic flow diagram illustrating that a mobile terminal records the current number of times that user image information is acquired if the age of the user is not within a preset age range in a first embodiment of a face recognition-based electronic cigarette unlocking method according to the present invention.

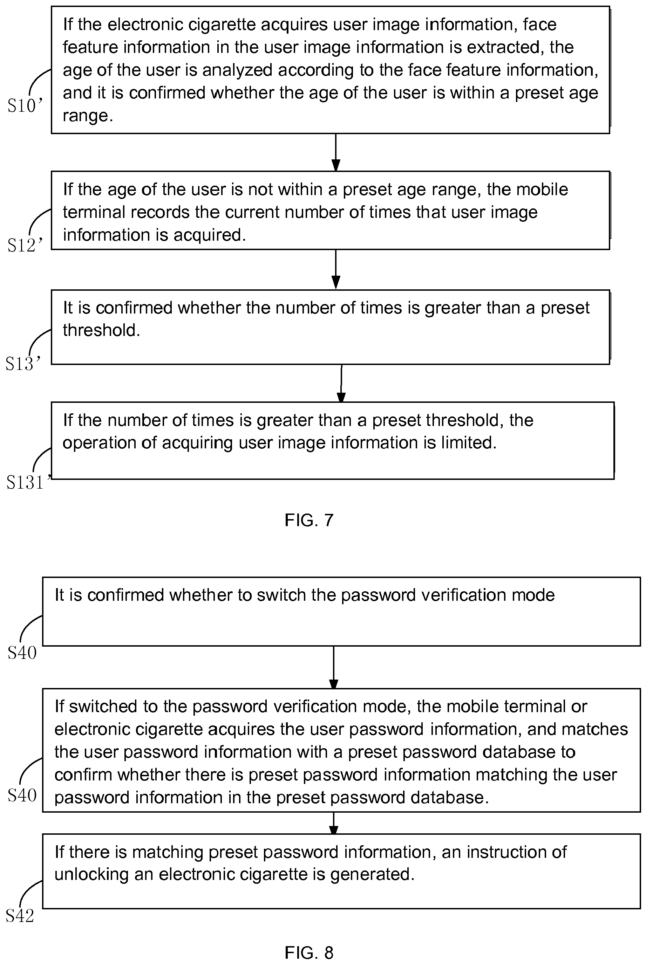

FIG. 7 is a schematic flow diagram illustrating that an electronic cigarette records the current number of times that user image information is acquired if the age of the user is not within a preset age range in a first embodiment of a face recognition-based electronic cigarette unlocking method according to the present invention.
FIG.8 is a schematic flow diagram illustrating a second embodiment of a face recognition-based electronic cigarette unlocking method according to the present invention.

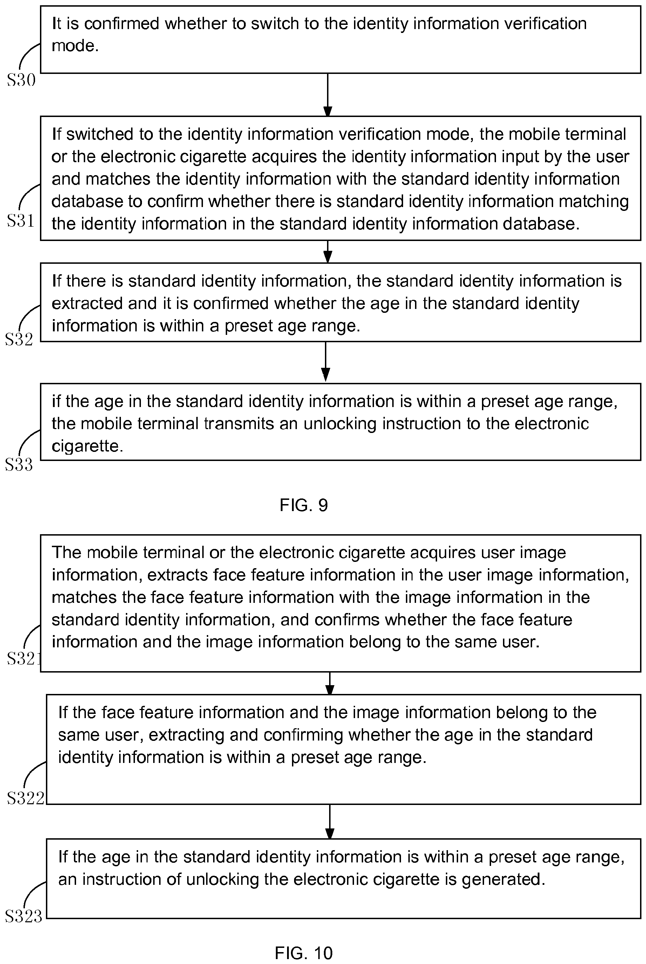

FIG.9 is a schematic flow diagram illustrating a third embodiment of a face recognition-based electronic cigarette unlocking method according to the present invention.
FIG.10 is a schematic flow diagram illustrating a fourth embodiment of a face recognition-based electronic cigarette unlocking method according to the present invention.

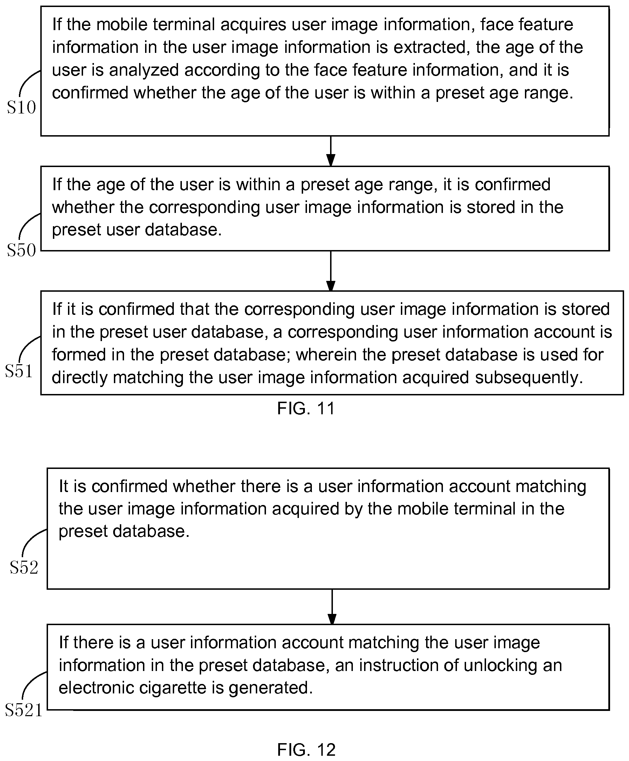

FIG.11 is a schematic detailed flow diagram illustrating a fourth embodiment of a face recognition-based electronic cigarette unlocking method according to a fourth embodiment of the present invention.
FIG.12 is a schematic flow diagram illustrating a fifth embodiment of a face recognition-based electronic cigarette unlocking method according to the present invention.

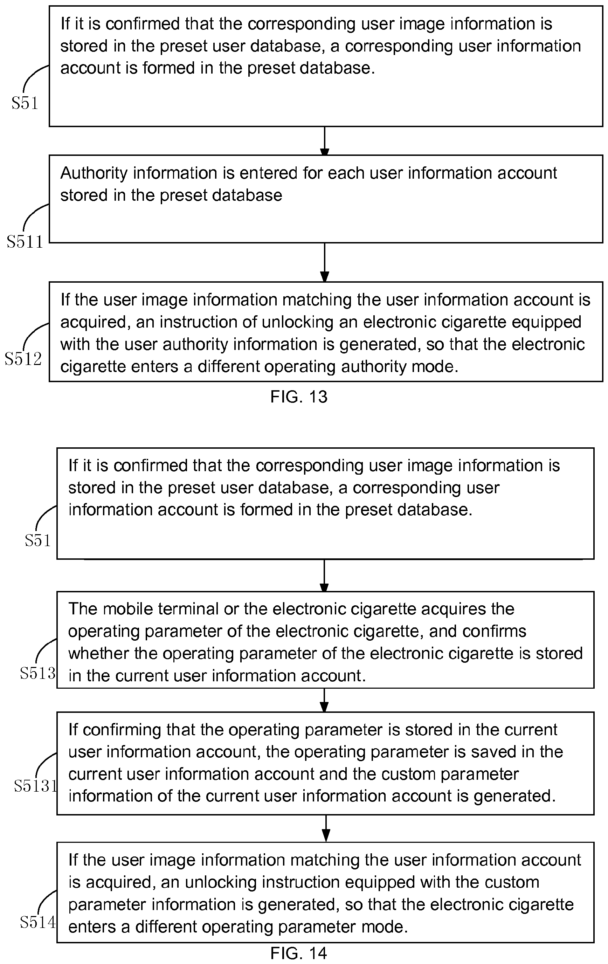

FIG. 13 is a schematic flow diagram illustrating a sixth embodiment of a face recognition-based electronic cigarette unlocking method according to the present invention.
FIG. 14 is a schematic flow diagram illustrating a seventh embodiment of a face recognition-based electronic cigarette unlocking method according to the present invention.
The implementation of aims, the function features and the advantages of the present disclosure are described below in further detail in conjunction with embodiments with reference to the drawings.

### DESCRIPTION OF THE EMBODIMENTS

It is to be understood that the specific embodiments described herein are merely illustrative of the present invention and are not intended to define the present invention.

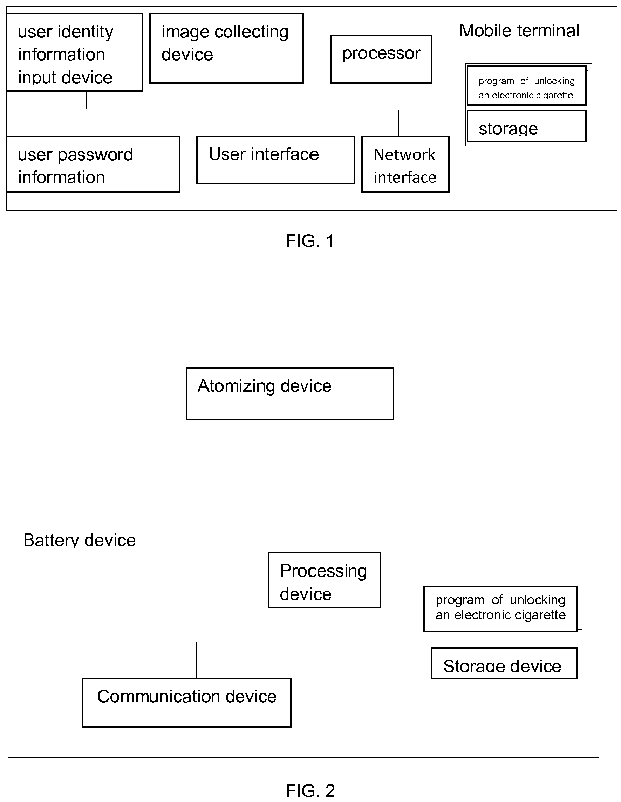

As shown in FIG. 1, FIG. 1 is a schematic diagram illustrating the structure of a mobile terminal in a hardware operating environment according to an embodiment of the present invention.

The mobile terminal of the embodiment of the present invention may be a PC, a smart phone, a tablet, etc. As shown in FIG. 1, the mobile terminal comprises an image capture device such as a camera. At the same time, the mobile terminal may comprise: a processor, such as a CPU, a network interface, a user interface, a storage 1005, and a communication bus. The communication bus is configured to implement connection communication between these components. The user interface may comprise a display and an input unit such as a keyboard. Preferably, the user interface may further comprise a standard wired interface and a wireless interface. The network interface may preferably comprise a standard wired interface and a wireless interface (such as a WI-FI interface). The storage may be a high-speed RAM memory or a non-volatile memory such as a magnetic disk storage.

Further, the mobile terminal may further comprise Radio Frequency (RF) circuit, a sensor, an audio circuit, a WiFi module, etc. The example of the sensor comprises an optical sensor, a motion sensor, or other sensors, for example. Specifically, the optical sensor may comprise an ambient optical sensor and a proximity sensor, wherein the ambient optical sensor may adjust the brightness of the display according to the brightness of the ambient light, and the proximity sensor may turn off the display and/or backlight when the user holds and covers the display.

It is to be understood by those skilled in the art that the terminal structure shown in FIG. 1 does not constitute a limitation to the terminal, and may comprise more or less components than those illustrated, or a combination of some components, or different component arrangements.

As shown in FIG. 1, the storage as a computer storage medium may comprise an operation server, a network communication module, a user interface module, and a program of unlocking the electronic cigarette.

In the terminal shown in FIG. 1, the network interface is mainly configured to be connected to a background server for data communication with a background server; the user interface is mainly configured to be connected to a client (a user side) for data communication with the client; and the processor may be configured to invoke a program of unlocking the electronic cigarette stored in the storage.

In the embodiment, the electronic cigarette comprises: a battery device and an atomizing device. The battery device comprises a storage device, a processing device, a communication device, and an operating program of the electronic cigarette operable on the processing device. The storage device may be a high-speed RAM storage device or a non-volatile memory such as a magnetic disk storage. The communication device is configured to establish an electrical connection with the mobile terminal. The processing device is configured to allow program of running the electronic cigarette itself. Moreover, when the unlocking information is received from the mobile terminal, an unlocking operation is performed to drive the electronic cigarette into an activation mode, so that the user may control the battery device of the electronic cigarette to supply power to the atomizing device to generate smoke for the user to smoke.

In the embodiment of the present invention, the mobile terminal is used as an execution subject, and the mobile terminal is equipped with an image collecting device configured to acquire user image information, for example; thus, the mobile terminal, the communication device, and the electronic cigarette form the face recognition-based electronic cigarette unlocking system.

The face recognition-based electronic cigarette unlocking system comprises the mobile terminal described above and the electronic cigarette and the communication device described above. The communication device is configured to establish a communication connection between the mobile terminal and the electronic cigarette. The communication connection may be wireless communication. For example, after pairing successfully through Bluetooth, wifi, wireless radio, etc., a communication connection is established. It is to be understood that the mobile terminal and the electronic cigarette may also be connected through a communication connection line, for example, data lines of various interfaces. If the electronic cigarette establishes a communication connection with the mobile terminal, the mobile terminal and the processor and the processing device in the electronic cigarette may invoke the program of unlocking an electronic cigarette and the program of running the electronic cigarette stored in the storage, respectively, to perform the following operations:
if the mobile terminal acquires user image information, extracting facial feature information in the user image information, analyzing the age of the user according to the facial feature information, and confirming whether the age of the user is within a preset age range;
if the age of the user is within a preset age range, transmitting, by the mobile terminal, an unlocking instruction to the electronic cigarette; and
if the electronic cigarette receives the unlocking instruction, performing a corresponding unlocking operation and entering an activated state.

Further, the processor and the processing device may also invoke the program of unlocking an electronic cigarette and the program of running the electronic cigarette stored in the storage and the storage device, respectively, to perform the following operations:

the step of extracting facial feature information in user image information, analyzing the age of the user according to the facial feature information, and confirming whether the age of the user is within a preset age range further comprises:
if the age of the user is not within a preset age range, recording, by the mobile terminal, the current number of times that user image information is acquired;
confirming whether the number of times is greater than a preset threshold; and
if the number of times is greater than a preset threshold, limiting the operation of acquiring user image information.

Further, the processor and the processing device may also invoke the program of unlocking an electronic cigarette and the program of running the electronic cigarette stored in the storage and the storage device, respectively, to perform the following operations:
confirming whether to switch the password verification mode;
if switched to the password verification mode, acquiring the user password information, and matching the user password information with a preset password database to confirm whether there is preset password information matching the user password information in the preset password database; and
if there is matching preset password information, generating an instruction of unlocking an electronic cigarette.

Specifically, the preset password information comprises digital password information, pattern drawing password information, fingerprint password information, and voice password information pre-stored by the user.

Further, the processor and the processing device may also invoke the program of unlocking an electronic cigarette and the program of running the electronic cigarette stored in the storage and the storage device, respectively, to perform the following operations:
subsequent to the step of if the number of times is greater than a preset threshold, limiting the operation of acquiring user image information, further comprising:
confirming whether to switch to the identity information verification mode;
if switched to the identity information verification mode, acquiring, by the mobile terminal, the user identity information and matching the user identity information with the standard identity information database to confirm whether there is standard identity information matching the user identity information in the standard identity information database;
if there is standard identity information, extracting and confirming whether the age in the standard identity information is within a preset age range; and
if the age in the standard identity information is within a preset age range, generating an instruction of unlocking an electronic cigarette.

Specifically, the standard identity information database comprises: a resident identity card information database, a resident driving license database, a resident residence permit database, and a resident Hong Kong and Macao passport database.

Further, the processor and the processing device may also invoke the program of unlocking an electronic cigarette and the program of running the electronic cigarette stored in the storage and the storage device, respectively, to perform the following operations:
prior to the step of extracting and confirming whether the age in the standard identity information is within a preset age range, further comprising:
acquiring, by the mobile terminal, user image information, extracting facial feature information in the user image information, matching the facial feature information with the image information in the standard identity information, and confirming whether the facial feature information and the image information belong to the same user;
if the facial feature information and the image information belong to the same user, extracting and confirming whether the age in the standard identity information is within a preset age range; and
if the age in the standard identity information is within a preset age range, generating an instruction of unlocking an electronic cigarette.

Specifically, the step of acquiring, by the mobile terminal, user image information, extracting facial feature information in the user image information, matching the facial feature information with the image information in the standard identity information, and confirming whether the facial feature information and the image information belong to the same user comprises:
initially extracting facial feature information in the user image information, and matching the facial feature information with the image information in the standard identity information to confirm whether the facial feature information and the image information belong to the image information of the same user;
if the facial feature information and the image information belong to the image information of the same user, extracting the dynamic information of the facial feature in the user image information again, and confirming whether the dynamic information of the facial feature in the user image information is successfully extracted; and
if the dynamic information is successfully extracted, confirming that the facial feature information and the image information belong to the same user.

Specifically, the dynamic information comprises a blinking motion, a mouth opening motion, and a body surface temperature of the face of the user.

Further, the processor and the processing device may also invoke the program of unlocking an electronic cigarette and the program of running the electronic cigarette stored in the storage and the storage device, respectively, to perform the following operations:
subsequent to the step of confirming whether the age of the user is within a preset age range, further comprising:
if the age of the user is within a preset age range, confirming whether the corresponding user image information is stored in the preset user database; and
if it is confirmed that the corresponding user image information is stored in the preset user database, forming a corresponding user information account in the preset database; wherein the preset database is used for directly matching the user image information acquired subsequently.

Preferably, prior to the step of analyzing the age of the user according to the facial feature information and confirming whether the age of the user is within a preset age range, the method further comprises:
confirming whether there is a user information account matching the acquired user image information in the preset database; and
if there is a user information account matching the user image information in the preset database, generating an instruction of unlocking an electronic cigarette.

Further, the processor and the processing device may also invoke the program of unlocking an electronic cigarette and the program of running the electronic cigarette stored in the storage and the storage device, respectively, to perform the following operations:
subsequent to the step of if it is confirmed that the corresponding user image information is stored in the preset user database, forming a corresponding user information account in the preset database, further comprising:
entering authority information for each user information account stored in the preset database; and
if the user image information matching the user information account is acquired, generating an unlocking instruction equipped with the authority information, so that the electronic cigarette enters a different operating authority mode.

Specifically, the authority information comprises an operating current output authority and an operating parameter adjustment authority;
the operating current output authority is configured to unlock the operating current output of the electronic cigarette, so that the battery device of the electronic cigarette is capable of supplying power to the atomizing device of the electronic cigarette for operation; and
the operating parameter adjustment authority is configured to unlock the operating parameter adjustment of the electronic cigarette, so that the battery device of the electronic cigarette is capable of adjusting the operating parameter set internally.

Further, the processor and the processing device may also invoke the program of unlocking an electronic cigarette and the program of running the electronic cigarette stored in the storage and the storage device, respectively, to perform the following operations:
subsequent to the step of if it is confirmed that the corresponding user image information is stored in the preset user database, forming a corresponding user information account in the preset database, further comprising:
acquiring the operating parameter of the electronic cigarette, and confirming whether the operating parameter of the electronic cigarette is stored in the current user information account;
if confirming that the operating parameter of the electronic cigarette is stored in the current user information account, saving the operating parameter in the current user information account and generating the custom parameter information of the current user information account; and
if the user image information matching the user information account is acquired, generating an instruction of unlocking an electronic cigarette equipped with the custom parameter information, so that the electronic cigarette enters a different operating parameter mode.

The present invention further provides a face recognition-based electronic cigarette unlocking method. Referring to FIG. 2, FIG. 2 is a schematic flow diagram illustrating a first embodiment of a face recognition-based electronic cigarette unlocking method according to the present invention.

In the embodiment, if the electronic cigarette is an electronic cigarette of integrating the atomizing device and the battery device, the electronic cigarette unlocking method refers to the integrally unlocking method of the integrated electronic cigarette; if the electronic cigarette is formed by combining anatomizing device and a battery device which are detachable, the face recognition-based electronic cigarette unlocking method refers to a control method of the battery device. The face recognition-based electronic cigarette unlocking method comprises the following steps.

At step S10, if the mobile terminal acquires user image information, facial feature information in the user image information is extracted, the age of the user is analyzed according to the facial feature information, and it is confirmed whether the age of the user is within a preset age range.

In the embodiment, an image collecting device provided in the mobile terminal may collect the current image information of the user, and extract facial feature information in the image information, such asa texture feature, a brightness feature, a temperature feature, and a color feature; analyze the extracted facial feature information, estimate the age of the user, and confirm whether the age of the user is within a preset age range.

At step S11, if the age of the user is within a preset age range, an instruction of unlocking an electronic cigarette is generated, and the mobile terminal transmits an unlocking instruction to the electronic cigarette.

At step S20, if the electronic cigarette receives the unlocking instruction, a corresponding unlocking operation is performed and an activated state is entered.

Specifically, the method for analyzing and estimating facial feature information may adopt an existing analyzing method. For example, an EHMM (Embedded Hidden Markov Model)-based age recognition method "determines the nonlinear relationship between the age and the change of the key features of the face by analyzing a large number of samples first, and establishes a nonlinear model based on the relationship; and then uses an PARI (Partial Ageing Ratio Image) to estimate the texture of the aging face; finally, uses the feature extracted from there constructed image to train the EHMM for face recognition." As another example, the face image-based age recognizing method disclosed in CN107480621"extracts the facial feature in the face image suitable for age recognition for each sample in the sample library first, wherein the facial feature comprises: a texture feature, a brightness feature, and a color feature; generates three training sample feature matrices of the texture feature, the brightness feature, and the color feature, respectively; and then introduces an age group parameter based on the three training sample feature matrices and obtain a sparse representation of the test sample in the tolerable error range by adjusting the age group parameter; and finally, uses the multi-feature fusion to finally determine the age corresponding to the face image of the test sample based on the sparse representation," which will not be described in detail in the present invention herein.

The present invention acquires the user image information and extracts the facial feature information in the image information for analyzing the age of the user, and then confirms whether the age of the user is within a preset age range; the preset age range may judge the age of the minors based on different national conditions, and set the legal adult age as the lower limit of the range; at the same time, the upper limit of the range is set as the safe use age to prevent the hidden danger resulted from the fact that the older people uses an inappropriately large amount of smoke of the electronic cigarette. It is further confirmed that the age of the user is within a preset age range. The phenomenon that minors use electronic cigarettes is effectively restricted. At the same time, it convenient to unlock without adding more modules in the electronic cigarette which results in an increase in the volume of the electronic cigarette product.

It is to be understood that, in another embodiment of the present invention, when the electronic cigarette is used as the execution subject, by providing an image collecting device in the electronic cigarette, the face recognition-based electronic cigarette unlocking method further comprises the following steps.

At S10',if the electronic cigarette acquires user image information, facial feature information in the user image information is extracted, the age of the user is analyzed according to the facial feature information, and it is confirmed whether the age of the user is within a preset age range.

In the embodiment, an image collecting device provided in the electronic cigarette may collect the current image information of the user, and extract facial feature information in the image information, such as a texture feature, a brightness feature, a temperature feature, and a color feature; analyze the extracted facial feature information, estimate the age of the user, and confirm whether the age of the user is within a preset age range.

At step S11', if the age of the user is within a preset age range, an instruction of unlocking an electronic cigarette is generated.

At step S20', the electronic cigarette performs a corresponding unlocking operation and enters an activated state according to the unlocking instruction.

Herein, in the embodiment, the electronic cigarette directly acquires the user image information and extracts the facial feature information in the image information for analyzing the age of the user, and then confirms whether the age of the user is within a preset age range; the preset age range may judge the age of the minors based on different national conditions, and set the legal adult age as the lower limit of the range; at the same time, the upper limit of the range is set as the safe use age to prevent the hidden danger resulted from the fact that the older people uses an inappropriately large amount of smoke of the electronic cigarette. Further, if it is confirmed that the age of the user is within a preset age range, the mobile terminal transmits an unlocking instruction to the electronic cigarette. After receiving the instruction, the electronic cigarette performs a corresponding unlocking operation and enters an activated state. The phenomenon that minors use electronic cigarettes is effectively restricted.

Specifically, subsequent to step S10, there are still the following steps.

At step S12, if the age of the user is not within a preset age range, the mobile terminal records the current number of times that user image information is acquired.

In the embodiment, when being not within the preset age range, it indicates that the acquired user image information does not satisfy the condition, and the unlocking instruction cannot be sent to the electronic cigarette. The prompt message for re-acquiring the user image information is sent to the display page of the mobile terminal, and the user may re-enter the image information according to the prompt information. At the same time, the mobile terminal records the number of times each time the user image information is acquired, for example, two times, three times, four times, etc.

At step S13, it is confirmed whether the number of times is greater than a preset threshold.

At step S131, if the number of times is greater than a preset threshold, the operation of acquiring user image information is limited.

It is to be understood that, in another embodiment of the present invention, when the electronic cigarette is used as the execution subject, subsequent to step S10', there are still the following steps.

At step S12', if the age of the user is not within a preset age range, the electronic cigarette records the current number of times that user image information is acquired.

In the embodiment, when being not within the preset age range, it indicates that the acquired user image information does not satisfy the condition, and the electronic cigarette cannot generate the unlocking instruction. The prompt message for re-acquiring the user image information is sent to the display page of the electronic cigarette, and the user may re-enter the image information according to the prompt information. At the same time, the electronic cigarette records the number of times each time the user image information is acquired, for example, two times, three times, four times, etc.

At step S131', if the number of times is greater than a preset threshold, the operation of acquiring user image information is limited.

In the embodiment, when it is detected that the number of times the user currently enters the image information is greater than the preset threshold, the operation that the user continues to enter the image information operation is limited, that is, limiting the image collecting device collecting the user image information. The user will be prompted to enter the image information again after a certain period of time.

In the embodiment, the mobile terminal or the electronic cigarette records the current number of times that user image information is acquired when being not within a preset age range; determines whether the number of times is greater than a preset threshold; and finally, limits the operation that the user enters the image information when the number of times is greater than a preset threshold; realizing that the operation that the user repeatedly enters the image is limited, thereby improving the safety of the electronic cigarette, and further limiting the hidden danger that the minors repeatedly enter the image to attempt to break so as to use the electronic cigarette.

Based on the first embodiment, the present invention provides a second embodiment of the face recognition-based electronic cigarette unlocking method of the present invention. In the embodiment, subsequent to step S131 or step S131', the method further comprises:
if the age of the user is not within a preset age range,
S40 , confirming whether to switch the password verification mode;

In the embodiment, after the number of times that the image information is currently entered is equal to a preset threshold, the prompt information as to whether to switch to the password verification mode is sent to the display page of the mobile terminal or the electronic cigarette, and the user may select to switch to the password information verification mode according to the prompt information. The phenomenon that the user within a preset age range cannot use normally due to the fact that there is a face recognition error and the recognition fails to pass is effectively prevented.

At S41, if switched to the password verification mode, the user password information is acquired, and the user password information is matched with a preset password database to confirm whether there is preset password information matching the user password information in the preset password database.

Specifically, the preset password information comprises digital password information, pattern drawing password information, fingerprint password information, and voice password information pre-stored by the user.

At S42, if there is matching preset password information, an instruction of unlocking an electronic cigarette is generated.

Herein, in the embodiment, by providing a password database, the user may pre-store the background unlocking password to prevent the phenomenon that the electronic cigarette cannot be used normally due to the fact that the face recognition fails to pass.

It is to be understood that, in the actual application process, the step S40 is not limited to operating after the step S131 or the step S131'. For example, in other embodiments of the present invention, the user may also directly select to enter the identity information verification mode, and the manner of performing step S40 falls also within the protection scope of the present invention.

Based on the first embodiment, the present invention provides a third embodiment of the face recognition-based electronic cigarette unlocking method of the present invention. In the embodiment, subsequent to step S131 or step S131', the method further comprises:
step S30, confirming whether to switch to the identity information verification mode.

In the embodiment, after the number of times that the image information is currently entered is equal to a preset threshold, the prompt information as to whether to switch to the identity verification mode is sent to the display page of the mobile terminal or the electronic cigarette, and the user may select to switch to the identity information verification mode according to the prompt information. The phenomenon that the user within a preset age range cannot use normally due to the fact that there is a face recognition error and the recognition fails to pass is effectively prevented.

At step S31, if switched to the identity information verification mode, the mobile terminal or the electronic cigarette acquires the identity information input by the user and matches the identity information with the standard identity information database to confirm whether there is standard identity information matching the identity information in the standard identity information database.

Specifically, in the embodiment, after selecting the identity information verification mode, the user may select an entry category, such as an ID card, a driving license, a resident residence permit, and a resident Hong Kong and Macao passport, to enter corresponding identity information, such as an identity card number, a resident residence permit number, a driving license number, a resident Hong Kong and Macao passport number, etc. It is convenient for different users to enter identity information to prove that their age is within the preset range. At the same time, the identity information entered by the user is matched with the standard identity information database of the selected entry category.

At step S32, if there is standard identity information, the standard identity information is extracted and it is confirmed whether the age in the standard identity information is within a preset age range.

Herein, in the embodiment, when there is information matching the identity information entered by the user in the standard identity information database, the age in the standard identity information is extracted, and it is verified whether the age is within a preset age range. The phenomenon that the current user has information in the standard identity information database, but still does not satisfy the preset age range is effectively prevented.

At step S33, if the age in the standard identity information is within a preset age range, an unlocking instruction is generated so that the electronic cigarette performs an unlocking operation.

Herein, in the embodiment, if the age in the extracted standard identity information is within a preset age range, the mobile terminal or the electronic cigarette completes verification, and generates an unlocking instruction. The electronic cigarette performs a corresponding unlocking operation and enters an activated state, realizing unlocking in a plurality of manners, and effectively preventing the phenomenon that the user cannot use normally due to the fact that there is an error in the face recognition age estimating method.

It is to be understood that, in the actual application process, the step S30 is not limited to being operated after the step S131 or the step S131'. For example, in other embodiments of the present invention, the user may directly select to enter the identity information verification mode, and the manner of performing step S30 falls also within the protection scope of the present invention.

Based on the third embodiment, a fourth embodiment of the face recognition-based electronic cigarette unlocking method of the present invention is provided. In the embodiment, prior to the step of extracting and confirming whether the age in the standard identity information is within a preset age range in step S32, the method further comprises:
S321, acquiring, by the mobile terminal or the electronic cigarette, user image information, extracting facial feature information in the user image information, matching the facial feature information with the image information in the standard identity information, and confirming whether the facial feature information and the image information belong to the same user;
step S322, if the facial feature information and the image information belong to the same user, extracting and confirming whether the age in the standard identity information is within a preset age range; and
step S323, if the age in the standard identity information is within a preset age range, generating an unlocking instruction so that the electronic cigarette performs an unlocking operation.

Herein, in the embodiment, when there is identity information entered by the user in the standard user information database, the mobile terminal or the electronic cigarette starts the image information collecting device, acquires the current user image information, matches the facial feature information in the image information with the image information in the standard identity information, and confirms whether the facial feature information and the image information belong to the same user. If the facial feature information and the image information belong to the same user, the subsequent steps in step S32 are performed. The phenomenon that the current user makes use of the identity information of others and the recognition passes after entry is effectively prevented.

It is to be understood that, in the actual application process, the step S321 is not limited to being performed prior to the step of extracting and confirming whether the age in the standard identity information is within a preset age range in step S32; for example, in other embodiments of the present invention, the step S321 may also be performed before generating the unlocking instruction after confirming that the age information in the matched standard identity information is within a preset age range, the manner of preventing the phenomenon that the current user makes use of the identity information of others and the recognition passes after entry falls also within the protection scope of the present invention.

Specifically, in the embodiment, the specific step of step S321 "acquiring, by the mobile terminal, user image information, extracting facial feature information in the user image information, matching the facial feature information with the image information in the standard identity information, and confirming whether the facial feature information and the image information belong to the same user" comprises:
step S3211, initially extracting facial feature information in the user image information, and matching the facial feature information with the image information in the standard identity information to confirm whether the facial feature information and the image information belong to the image information of the same user;
step S3212, if the facial feature information and the image information belong to the image information of the same user, extracting the dynamic information of the facial feature in the user image information again, and confirming whether the dynamic information of the facial feature in the user image information is successfully extracted; and
step S3213,if the dynamic information is successfully extracted, confirming that the facial feature information and the image information belong to the same user.

Herein, in the embodiment, the static feature information of the face is initially extracted, the current dynamic feature information of the user is acquired again after the comparison is successful, for example, the dynamic feature information such as blinking action, mouth opening action, etc. Alternatively, the body surface temperature may also be detected and compared with the normal temperature of the human body. The hidden danger that the current user makes use of the image information of others for verification so as to pass is effectively prevented. The phenomenon that the users who do not satisfy the age range break so as to use the electronic cigarette is further prevented.

Based on any one of the first to fourth embodiments of the present invention, a fifth embodiment of the present invention is provided. In the embodiment, subsequent to the step of confirming whether the age of the user is within a preset age range in step S10, the method further comprises :
step S50, if the age of the user is within a preset age range, confirming whether the corresponding user image information is stored in the preset user database; and
step S51, if it is confirmed that the corresponding user image information is stored in the preset user database, forming a corresponding user information account in the preset database; wherein the preset database is used for directly matching the user image information acquired subsequently.

Further, prior to the step of analyzing the age of the user according to the facial feature information and confirming whether the age of the user is within a preset age range when the mobile terminal acquires the user image information after the user information account is established, the method further comprises:
step S52, confirming whether there is a user information account matching the user image information acquired by the mobile terminal or the electronic cigarette in the preset database; and
step S521, if there is a user information account matching the user image information in the preset database, generating an instruction of unlocking an electronic cigarette.

Herein, in the embodiment, the storage of the mobile terminal is further provided with a preset user database. When the age of the user is within a preset age range, the user may select to store the current corresponding user image information in the preset database, and establish a corresponding user information account. When the subsequent user uses again, only the user image information is used, and the facial feature information in the user image information is directly compared with the user information account in the preset database. If there is a corresponding user information account, an instruction of unlocking an electronic cigarette is generated without estimating the age, which effectively reduces the amount of computation of the mobile terminal or electronic cigarette.

Based on the fifth embodiment, the present invention provides a sixth embodiment of the face recognition-based electronic cigarette unlocking method. In the embodiment, subsequent to step S51 "if it is confirmed that the corresponding user image information is stored in the preset user database, forming a corresponding user information account in the preset database", the method further comprises:
step S511, entering authority information for each user information account stored in the preset database; and
step S512, if the user image information matching the user information account is acquired, generating an unlocking instruction equipped with the authority information, so that the electronic cigarette enters a different operating authority mode.

Specifically, the authority information comprises an operating current output authority and an operating parameter adjustment authority;
the operating current output authority is configured to unlock the operating current output of the electronic cigarette, so that the battery device of the electronic cigarette is capable of supplying power to the atomizing device of the electronic cigarette for operation; and
the operating parameter adjustment authority is configured to unlock the operating parameter adjustment of the electronic cigarette, so that the battery device of the electronic cigarette is capable of adjusting the operating parameter set internally.

Herein, in the present invention, when the mobile terminal or the electronic cigarette collects the image information of different users by adding the authority information to each user information account in the preset database, an unlocking instruction equipped with the authority information is generated, so that the electronic cigarette enters a different operating authority mode. When it is effective for each user to use, there is a hierarchical authority. When the user only has the operating current output authority, the electronic cigarette enters an activation state. The electronic cigarette battery device may normally supply power to the atomizing device to generate smoke for the user to smoke.

When the user has both the operating current output authority and the operating parameter adjustment authority, the electronic cigarette enters the activation state and enters the adjustable state at the same time, so that the user may adjust various operating parameters of the electronic cigarette, such as output voltage, output power, display brightness, display interface style, single smoking time, etc., effectively preventing the hidden danger that the output power change of the adjusted parameter damages the atomizing device since the parameter cannot be locked in the use of a plurality of users.

Based on the fifth embodiment, the present invention provides a seventh embodiment of the face recognition-based electronic cigarette unlocking method. In the embodiment, subsequent to step S51 "if it is confirmed that the corresponding user image information is stored in the preset user database, forming a corresponding user information account in the preset database", the method further comprises:
S513, acquiring, by the mobile terminal or the electronic cigarette, the operating parameter of the electronic cigarette, and confirming whether the operating parameter of the electronic cigarette is stored in the current user information account;
S5131, if confirming that the operating parameter of the electronic cigarette is stored in the current user information account, saving the operating parameter in the current user information account and generating the custom parameter information of the current user information account; and
S514, if the user image information matching the user information account is acquired, generating an instruction of unlocking an electronic cigarette equipped with the custom parameter information, so that the electronic cigarette enters a different operating parameter mode.

Herein, in the present embodiment, in the present invention, the operating parameter of the electronic cigarette is stored in the current user information account to form the custom parameter information of the current user information account so that when the mobile terminal collects image information of different users, the instruction of unlocking an electronic cigarette equipped with the custom parameter information is generated, so that the electronic cigarette enters a different operating parameter mode. It is not necessary to set parameters every time, which is convenient for users to use.

It is to be understood that, in the actual application process, the electronic cigarette operating parameter may be directly acquired in the mobile terminal. The internal operating parameter may be detected by the electronic cigarette, and then the information is transmitted to the mobile terminal for storage. Both the manners fall within the protection scope of the present invention.

The present invention further provides a mobile terminal, wherein the mobile terminal comprises an image collecting device, a user identity information input device, a user password information entering device,a storage, a processor, and a program of unlocking an electronic cigarette stored on the storage and operable on the processor, when the mobile terminal is used as an execution subject of the face recognition-based electronic cigarette unlocking method. The program of unlocking an electronic cigarette implements the steps of the method executed by the mobile terminal in the face recognition-based electronic cigarette unlocking method when being executed by the processor. Refer to the above embodiments for the specific steps of the face recognition-based electronic cigarette unlocking method. Since the mobile terminal adopts all the technical solutions of all the above embodiments, at least all the beneficial effects brought by the technical solutions of the above embodiments are obtained, which will not be described in detail herein.

Specifically, the mobile terminal further comprises a communication module, wherein the communication module is configured to establish a communication connection with the electronic cigarette, and the communication module comprises Bluetooth, wifi, radio frequency, and data connecting wires. The above steps of the face recognition-based electronic cigarette unlocking method may be executed after being successfully paired with the electronic cigarette through the communication module.

The present invention further provides a computer readable storage medium, wherein a program of unlocking an electronic cigarette is stored in the computer readable storage medium, wherein the program of unlocking an electronic cigarette implements the steps of the method executed by the mobile terminal in the face recognition-based electronic cigarette unlocking method when being executed by the processor. Refer to the above embodiments for the specific steps of the face recognition-based electronic cigarette unlocking method. Since the computer readable storage medium adopts all the technical solutions of all the above embodiments, at least all the beneficial effects brought by the technical solutions of the above embodiments are obtained, which will not be described in detail herein.

The present invention further provides an electronic cigarette, wherein the electronic cigarette comprises an atomizing device and a battery device, the battery device comprises a storage device, a processing device, and a program of running an electronic cigarette stored on the storage device and operable on the processing device. The program of running an electronic cigarette implements the steps of the method executed by the electronic cigarette in the face recognition-based electronic cigarette unlocking method when being executed by the processor or the computer. Refer to the above embodiments for the specific steps of the face recognition-based electronic cigarette unlocking method. Since the electronic cigarette adopts all the technical solutions of all the above embodiments, at least all the beneficial effects brought by the technical solutions of the above embodiments are obtained, which will not be described in detail herein.

The electronic cigarette further comprises a user image information collecting device, a user identity information input device, and a user password information entering device when the electronic cigarette is used as an execution subject of the face recognition-based electronic cigarette unlocking method, so as to execute the steps of the face recognition-based electronic cigarette unlocking method in each of the above embodiments.

Specifically, the atomizing device is provided with a receiving chamber in which the tobacco product is stored, an air flow passage in which the user smokes, and a heating component provided in the air flow passage. When the battery device is in the activation mode, the user may supply power to the atomizing device by controlling the battery device so that the heating component in the atomizing device heats the tobacco product stored in the receiving chamber to generate smoke for the user to smoke. Herein, the tobacco product comprises tobacco tar, cigarettes, tobacco shred, or tobacco paste, tobacco cartridge, etc., made by processing tobacco shred.

The present invention further provides a computer readable storage device, wherein a program of running an electronic cigarette is stored in the computer readable storage medium, wherein the program of running an electronic cigarette implements the steps of the method executed by the electronic cigarette in the face recognition-based electronic cigarette unlocking method when being executed by the processing device. Refer to the above embodiments for the specific steps of the face recognition-based electronic cigarette unlocking method. Since the computer readable storage medium adopts all the technical solutions of all the above embodiments, at least all the beneficial effects brought by the technical solutions of the above embodiments are obtained, which will not be described in detail herein.

The present invention further provides a face recognition-based electronic cigarette unlocking system. In the embodiment, the electronic cigarette unlocking system comprises a mobile terminal, an electronic cigarette, and a communication device;
the mobile terminal comprises a user image information collecting device, a user identity information input device, a user password information entering device, a storage, a processor, and a face recognition-based electronic cigarette unlocking program stored on the storage and operable on the processor, wherein the program implements the steps of the method executed by the mobile terminal in the face recognition-based electronic cigarette unlocking method when being executed by the processor; refer to the above embodiments for the specific steps of the face recognition-based electronic cigarette unlocking method;
the communication device transmits the instruction of unlocking an electronic cigarette to the electronic cigarette; and
the electronic cigarette comprises a storage device, a processing device, and a program of running an electronic cigarette stored on the storage device and operable on the processing device. The program of running an electronic cigarette implements the steps of the method executed by the electronic cigarette in the face recognition-based electronic cigarette unlocking method when being executed by the processor. Refer to the above embodiments for the specific steps of the face recognition-based electronic cigarette unlocking method.

Specifically, the communication device comprises a wired communication device or a wireless communication device. The wired communication device or the wireless communication device is at least one of WIFI, Bluetooth, and USB communication devices. Since the electronic cigarette and the mobile terminal adopt all the technical solutions of all the above embodiments, at least all the beneficial effects brought by the technical solutions of the above embodiments are obtained, which will not be described in detail herein.

It is to be understood that the term "comprises", "includes", or any other variants thereof herein is intended to encompass a non-exclusive inclusion, such that a process, method, article, or system comprising a series of elements not only comprises those elements, but further comprises other elements that are not explicitly listed, or elements that are inherent to such a process, method, article, or system. An element defined by the phrase "comprising a..." does not exclude the presence of additional equivalent elements in the process, method, article, or system comprising the element without further limitation.

The serial numbers of the embodiments of the present invention described above are merely for the description, rather than representing that the embodiments are superior or inferior.

Through the description of the above embodiments, those skilled in the art may clearly understand that the above embodiment method may be implemented by means of software plus a necessary general hardware platform, and of course, and may also be implemented by means of hardware, but in many cases, the former is a better implementation. Based on such understanding, the technical solution of the present invention in essence or the part contributing to the prior art may be embodied in the form of a software product stored in a storage medium (such as ROM/RAM, a disk, and an optical disk), comprising several instructions for causing a terminal device (which may be a mobile phone, a computer, a server, an air conditioner, or a network device, etc.) to execute the methods described in various embodiments of the present invention.

The above are preferred embodiments of the present invention merely and are not intended to limit the patent scope of the present invention. Any equivalent structures made according to the description and the accompanying drawings of the present invention without departing from the idea of the present invention, or any equivalent structures applied in other relevant technical fields directly or indirectly are intended to be comprised in the patent protection scope of the present invention.

## Claims

1. An unlocking method for an electronic cigarette based on face recognition, the unlocking method comprising the steps of:
acquiring image information of a user, extracting facial feature information from the image information of the user, analyzing an age of the user according to the facial feature information;
determining whether the age of the user is within a preset age range; and
if the user is within the preset age range, generating an instruction of unlocking the electronic cigarette.

2. The unlocking method for electronic cigarette according to claim 1, wherein the step of extracting facial feature information in user image information, analyzing the age of the user according to the facial feature information, and determining whether the age of the user is within a preset age range further comprises:
if the age of the user is not within a preset age range, recording the current number of times that user image information is acquired;
determining whether the number of times is greater than a preset threshold; and
if the number of times is greater than a preset threshold, limiting the operation of acquiring user image information.

3. The unlocking method for electronic cigarette according to claim 1, wherein:
it is confirmed whether the age of the user is within a preset age range; if the age of the user is not within a preset age range,
it is confirmed whether to switch the password verification mode;
if switched to the password verification mode, the user password information is acquired, and the user password information is matched with a preset password database to confirm whether there is preset password information matching the user password information in the preset password database; and
if there is matching preset password information, an instruction of unlocking an electronic cigarette is generated.

4. The unlocking method for electronic cigarette according to claim 3, wherein:
the preset password information comprises digital password information, pattern drawing password information, fingerprint password information, and voice password information pre-stored by the user.

5. The unlocking method for electronic cigarette according to claim 1, wherein:
it is confirmed whether the age of the user is within a preset age range;
if the age of the user is not within a preset age range, it is confirmed whether to switch to the identity information verification mode;
if switched to the identity information verification mode, the user identity information is acquired and the user identity information is matched with the standard identity information database;
it is confirmed whether there is standard identity information matching the user identity information in the standard identity information database;
if there is standard identity information, the standard identity information is extracted and it is confirmed whether the age in the standard identity information is within a preset age range; and
if the age in the standard identity information is within a preset age range, an instruction of unlocking an electronic cigarette is generated.

6. The unlocking method for electronic cigarette according to claim 5, wherein:
the standard identity information database comprises: a resident identity card information database, a resident driving license database, a resident residence permit database, and a resident Hong Kong and Macao passport database.

7. The unlocking method for electronic cigarette according to claim 5, wherein prior to the step of extracting and determining whether the age in the standard identity information is within a preset age range, the method further comprises:
acquiring user image information, extracting facial feature information in the user image information, matching the facial feature information with the image information in the standard identity information, and determining whether the facial feature information and the image information belong to the same user;
if the facial feature information and the image information belong to the same user, extracting and determining whether the age in the standard identity information is within a preset age range; and
if the age in the standard identity information is within a preset age range, generating an instruction of unlocking an electronic cigarette.

8. The unlocking method for electronic cigarette according to claim 4, wherein the step of acquiring user image information, extracting facial feature information in the user image information, matching the facial feature information with the image information in the standard identity information, and determining whether the facial feature information and the image information belong to the same user comprises:
initially extracting facial feature information in the user image information, and
matching the facial feature information with the image information in the standard identity information to confirm whether the facial feature information and the image information belong to the image information of the same user;
if the facial feature information and the image information belong to the image information of the same user, extracting the dynamic information of the facial feature in the user image information again, and determining whether the dynamic information of the facial feature in the user image information is successfully extracted; and
if the dynamic information is successfully extracted, determining that the facial feature information and the image information belong to the same user.

9. The unlocking method for electronic cigarette according to claim 8, wherein: the dynamic information comprises a blinking motion, a mouth opening motion, and a body surface temperature of the face of the user.

10. The unlocking method for electronic cigarette according to any one of claims 1 to 9, wherein subsequent to the step of determining whether the age of the user is within a preset age range, the method further comprises:
if the age of the user is within a preset age range, determining whether the corresponding user image information is stored in the preset user database; and
if it is confirmed that the corresponding user image information is stored in the preset user database, forming a corresponding user information account in the preset database; wherein the preset database is used for directly matching the user image information acquired subsequently.

11. A mobile terminal, wherein the mobile terminal comprises a user image information collecting device, a storage, and a processor, wherein the storage is configured for storing a program of an unlocking method for electronic cigarette, when the program is executed, the program implements the steps of the unlocking method for electronic cigarette according to any one of claims 1 to 10.

12. A computer readable storage medium, wherein the computer readable storage medium is configured for storing a program of unlocking an electronic cigarette, when being executed by a computer, the program of unlocking the electronic cigarette implements the steps of the unlocking method for electronic cigarette according to any one of claims 1 to 10.

13. An electronic cigarette, wherein the electronic cigarette comprises a user image information collecting device, a storage device and a processing device, wherein the storage device is configured for storing a program of the unlocking method for electronic cigarette according to any one of claims 1 to 10, wherein the program implements the steps of the unlocking method for electronic cigarette according to any one of claims 1 to 10 when being executed by the processing device.

14. A computer readable storage device, wherein the computer readable storage device is configured for storing a program of the unlocking method for electronic cigarette according to any one of claims 1 to 10 , wherein the program implements the steps of the unlocking method for electronic cigarette according to any one of claims 1 to 10 when being executed.

15. An unlocking system for electronic cigarette based on face recognition, wherein the unlocking system comprises a mobile terminal, an electronic cigarette, and a communication device;
the mobile terminal comprises a user image information collecting device, a storage, and a processor, wherein the storage is configured for storing a program of a method for electronic cigarette based on face recognition, wherein the program implements the steps of the unlocking method for electronic cigarette according to any one of claims 1 to 10 and generates an instruction of unlocking an electronic cigarette when being executed;
the communication device is configured for transmitting the instruction of unlocking an electronic cigarette to the electronic cigarette; and
the electronic cigarette is configured for receiving the instruction of unlocking an electronic cigarette and performing an operation of unlocking an electronic cigarette.

## Amended claims

### Amended claims in accordance with Rule 137(2) EPC.

1. An unlocking method for an electronic cigarette based on face recognition, the unlocking method comprising the steps of:
acquiring image information of a user, extracting facial feature information from the image information of the user, analyzing an age of the user according to the facial feature information;
determining whether the age of the user is within a preset age range; and
if the user is within the preset age range, generating an instruction of unlocking the electronic cigarette;
**characterized in that**:
it is confirmed whether the age of the user is within a preset age range;
if the age of the user is not within a preset age range, it is confirmed whether to switch the password verification mode;
if switched to the password verification mode, the user password information is acquired, and the user password information is matched with a preset password database to confirm whether there is preset password information matching the user password information in the preset password database; and
if there is matching preset password information, an instruction of unlocking an electronic cigarette is generated.

2. The unlocking method for electronic cigarette according to claim 1, wherein the step of extracting facial feature information in user image information, analyzing the age of the user according to the facial feature information, and determining whether the age of the user is within a preset age range further comprises:
if the age of the user is not within a preset age range, recording the current number of times that user image information is acquired;
determining whether the number of times is greater than a preset threshold; and
if the number of times is greater than a preset threshold, limiting the operation of acquiring user image information.

3. The unlocking method for electronic cigarette according to claim 1, wherein:
the preset password information comprises digital password information, pattern drawing password information, fingerprint password information, and voice password information pre-stored by the user.

4. The unlocking method for electronic cigarette according to claim 1, wherein:
it is confirmed whether the age of the user is within a preset age range;
if the age of the user is not within a preset age range, it is confirmed whether to switch to the identity information verification mode;
if switched to the identity information verification mode, the user identity information is acquired and the user identity information is matched with the standard identity information database;
it is confirmed whether there is standard identity information matching the user identity information in the standard identity information database;
if there is standard identity information, the standard identity information is extracted and it is confirmed whether the age in the standard identity information is within a preset age range; and
if the age in the standard identity information is within a preset age range, an instruction of unlocking an electronic cigarette is generated.

5. The unlocking method for electronic cigarette according to claim 4, wherein:
the standard identity information database comprises: a resident identity card information database, a resident driving license database, a resident residence permit database, and a resident Hong Kong and Macao passport database.

6. The unlocking method for electronic cigarette according to claim 4, wherein prior to the step of extracting and determining whether the age in the standard identity information is within a preset age range, the method further comprises:
acquiring user image information, extracting facial feature information in the user image information, matching the facial feature information with the image information in the standard identity information, and determining whether the facial feature information and the image information belong to the same user;
if the facial feature information and the image information belong to the same user, extracting and determining whether the age in the standard identity information is within a preset age range; and
if the age in the standard identity information is within a preset age range, generating an instruction of unlocking an electronic cigarette.

7. The unlocking method for electronic cigarette according to claim 3, wherein the step of acquiring user image information, extracting facial feature information in the user image information, matching the facial feature information with the image information in the standard identity information, and determining whether the facial feature information and the image information belong to the same user comprises:
initially extracting facial feature information in the user image information, and matching the facial feature information with the image information in the standard identity information to confirm whether the facial feature information and the image information belong to the image information of the same user;
if the facial feature information and the image information belong to the image information of the same user, extracting the dynamic information of the facial feature in the user image information again, and determining whether the dynamic information of the facial feature in the user image information is successfully extracted; and
if the dynamic information is successfully extracted, determining that the facial feature information and the image information belong to the same user.

8. The unlocking method for electronic cigarette according to claim 7, wherein: the dynamic information comprises a blinking motion, a mouth opening motion, and a body surface temperature of the face of the user.

9. The unlocking method for electronic cigarette according to any one of claims 1 to 8, wherein subsequent to the step of determining whether the age of the user is within a preset age range, the method further comprises:
if the age of the user is within a preset age range, determining whether the corresponding user image information is stored in the preset user database; and
if it is confirmed that the corresponding user image information is stored in the preset user database, forming a corresponding user information account in the preset database; wherein the preset database is used for directly matching the user image information acquired subsequently.

10. A mobile terminal, wherein the mobile terminal comprises a user image information collecting device, a storage, and a processor, wherein the storage is configured for storing a program of an unlocking method for electronic cigarette, when the program is executed, the program implements the steps of the unlocking method for electronic cigarette according to any one of claims 1 to 9.

11. A computer readable storage medium, wherein the computer readable storage medium is configured for storing a program of unlocking an electronic cigarette, when being executed by a computer, the program of unlocking the electronic cigarette implements the steps of the unlocking method for electronic cigarette according to any one of claims 1 to 9.

12. An electronic cigarette, wherein the electronic cigarette comprises a user image information collecting device, a storage device and a processing device, wherein the storage device is configured for storing a program of the unlocking method for electronic cigarette according to any one of claims 1 to 10, wherein the program implements the steps of the unlocking method for electronic cigarette according to any one of claims 1 to 9 when being executed by the processing device.

13. A computer readable storage device, wherein the computer readable storage device is configured for storing a program of the unlocking method for electronic cigarette according to any one of claims 1 to 10 , wherein the program implements the steps of the unlocking method for electronic cigarette according to any one of claims 1 to 9 when being executed.

14. An unlocking system for electronic cigarette based on face recognition, wherein the unlocking system comprises a mobile terminal, an electronic cigarette, and a communication device;
the mobile terminal comprises a user image information collecting device, a storage, and a processor, wherein the storage is configured for storing a program of a method for electronic cigarette based on face recognition, wherein the program implements the steps of the unlocking method for electronic cigarette according to any one of claims 1 to 9 and generates an instruction of unlocking an electronic cigarette when being executed;
the communication device is configured for transmitting the instruction of unlocking an electronic cigarette to the electronic cigarette; and
the electronic cigarette is configured for receiving the instruction of unlocking an electronic cigarette and performing an operation of unlocking an electronic cigarette.
